# EUROPEAN PATENT SPECIFICATION

(11) **EP 3 462 048 B1**
(45) Date of publication and mention of the grant of the patent: **17.02.2021**
(21) Application number: 18197191.2
(22) Date of filing: 27.09.2018
(51) Int. Cl.: F16C 13/00, F01L 1/18, F16H 53/06, F16C 33/62, F01L 1/14, F01L 1/24, F16C 33/34

(54) **ROLLER HYDRAULIC VALVE LIFTER BEARING**
LAGER FÜR HYDRAULISCHEN VENTILSTÖSSEL MIT ROLLE
PALIER POUR POUSSOIR DE SOUPAPE HYDRAULIQUE À GALET

(30) Priority: 27.09.2017 US 201762563958 P
(43) Date of publication of application: 03.04.2019
(73) Proprietor: Roller Bearing Company of America, Inc., Oxford, CT 06478 (US)
(72) Inventor: Smith, Kelvin M., New Hartford, 06057 (US); Smooke, Eric, Woodbridge, CT 06525 (US)
(74) Representative: Ström & Gulliksson AB

(56) References cited:
- EP-A2- 1 482 190
- US-A- 6 164 255
- US-B2- 9 267 538

## Description

### Technical Field

The present invention relates generally to a roller hydraulic valve lifter bearing with improved life, and more particularly to a roller hydraulic lifter bearing having a plurality of needle rollers and a shaft that are manufactured from an AISI 52100 alloy steel that is carbo-nitrided to a minimum HRc 65, to increase the life thereof by at least 1.5 times the life of a roller hydraulic lifter bearing having a plurality of needle rollers and a shaft that are manufactured from an AISI 52100 alloy steel, with a surface hardness of less than HRc 65 and without such carbo-nitriding.

### Background

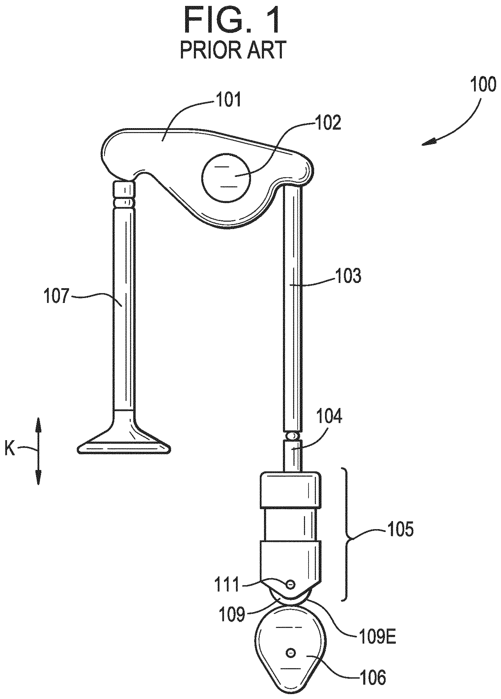

As shown in FIG. 1, a prior art cam-in-block engine valvetrain (also referred to as pushrod type engine valvetrain) is generally designated by the numeral 100. The cam-in-block engine valvetrain 100 has a rocker arm 101 that pivots on a shaft 102 mounted to the engine block (not shown). A push rod 103 is pivotally coupled to one side of the rocker arm 101. A hydraulic piston 104 is connected to a distal end of the push rod 103. The cam-in-block engine valvetrain 100 includes a roller hydraulic valve lifter 105 that is disposed in a bore in the engine block. The roller hydraulic valve lifter 105 has an interior area in which a portion of the hydraulic piston is slidingly disposed. The roller hydraulic valve lifter 105 includes a bearing 109 that is rotatably mounted to a shaft 111 that extends through and is secured to the roller hydraulic valve lifter 105. A plurality of needle rollers (not shown) are disposed between the bearing 109 and the shaft 111. A portion of the bearing 109 (e.g., the outer ring) extends out of the roller hydraulic valve lifter 105. An exterior surface 109E of the bearing 109 rollingly engages a cam 106. Typically, prior art roller hydraulic valve lifters 105 have the shaft 111 and the needle rollers in the bearing 109 manufactured from an AISI 52100 alloy steel with a surface hardness of less than HRc 65 A prior art roller hydraulic valve lifter is for instance shown in US 9 267 538 B2 according to the preamble of claim 1.

Rotation of the cam 106 causes rotation of the bearing 109 (e.g., the outer ring) and causes the roller hydraulic valve lifter 105, the bearing 109, the hydraulic piston 104, and the pushrod 103 to oscillate in the direction of the arrow K. Design life of the cam-in-block engine valvetrain can require the bearing 109 to withstand well over one hundred million revolutions. However, the needle rollers and shaft of prior art bearings 109 and shafts 111 tend to fail prematurely in some applications.

Those skilled in the relevant art understand that increasing the size (i.e., outside diameter) of the shaft 111 and/or the size (i.e., axial length and/or outside diameter) of the needle rollers would increase life (i.e., reduce contact pressure) on the shaft and the needle rollers. However, increasing the size of the shaft 111 and/or the needle rollers could require the outer ring of the bearing 109 to be thinner, which can make the outer ring more susceptible to failure. In addition, lengthening the needle rollers or making the outer ring larger to accommodate a larger shaft and needle rollers would require that the roller hydraulic valve lifter 105 be made larger. Making the roller hydraulic valve lifter 105 larger would require redesign of the valve train and/or engine block.

Heat treatment and surface diffusion processing of metallic materials can increase the surface hardness of such materials. However, such heat treatment and surface diffusion has been discouraged because of the prohibitive cost and manufacturing time. Those skilled in the relevant art would understand that the cost of heat treatment and surface diffusion increases exponentially with increasing case depth. Moreover, there are many combinations of roller hydraulic valve lifter 105 components to target improvement on for increase in life. Selection of the appropriate component and type of improvement technology typically requires extensive analysis and testing. A solution for improving the life of roller hydraulic valve lifters 105 has evaded those skilled in the art for many years.

As shown in FIG. 8, U.S Patent No. 9,267,538, "Rolling Sliding Parts" discloses a heat treatment process that includes a carbo-nitriding step, followed by a first quench, followed by heating above the austenitizing temperature (e.g., about 800°C) followed by a second quench. The second quench includes heating to 845°C, cooling below A1, heating again to 800°C and quenching. See U.S. Patent No. 9,267,538.

Based on the foregoing, there is a need to provide a roller hydraulic valve lifter that is less expensive and retains greater dimensional stability compared to the prior art roller hydraulic valve lifter.

### Summary

There is disclosed herein a roller hydraulic valve lifter that includes a body that has a longitudinal central axis and an interior area defined by an inside surface. The inside surface includes a first flat surface and a second flat surface, opposite the first flat surface. The first flat surface and the second flat surface being connected by a pair of connecting walls, a first bore extending through the first flat surface and the second flat surface, the first bore being substantially perpendicular to the longitudinal axis. The roller hydraulic valve lifter includes a bearing disposed partially in the interior area. The bearing includes an outer ring that has a substantially cylindrical exterior bearing surface and a substantially cylindrical inner bearing surface that defines a second bore. The roller hydraulic valve lifter includes a shaft that extends through the first bore and the second bore. The shaft extends between the first flat surface and the second flat surface. A plurality of needle rollers is disposed between and rollingly engage the shaft and the cylindrical inner bearing surface. The shaft and the plurality of needle rollers are manufactured from an AISI 52100 alloy steel that is carbo-nitrided. The shaft and the plurality of rollers each have a surface hardness of a minimum of HRc 65.

In one embodiment, the shaft and the plurality of needle rollers each have a minimum carbo-nitrided case depth of 0.25 mm. In one embodiment, the shaft and plurality of needle rollers each have a minimum carbo-nitrided case depth of between 0.010 inches to 0.020 inches (0.25 mm to 0.51 mm). In one embodiment, the shaft and the plurality of needle rollers each have an exterior surface that is in compression. In one embodiment, the exterior surface is treated by a mass finishing process to enhance the surface compression. In one embodiment, the shaft and the plurality of needle rollers each have a core hardness of HRc 59 to HRc 65.

There is further disclosed herein a method of increasing the life of a roller hydraulic valve lifter. The method includes providing a first roller hydraulic valve lifter that has a body which has a predetermined set of dimensions and a first shaft mounted in the body. The first shaft has a first outside diameter. The first roller hydraulic valve lifter includes a first bearing that has an outer ring which has a second outside diameter, a first inside diameter and an axial length. The first roller hydraulic valve lifter includes a plurality of first needle rollers each having a third outside diameter and an axial length. The plurality of first needle rollers is disposed between and in rolling engagement with the first shaft and the outer ring. The first shaft and the plurality of first needle rollers are manufactured from an AISI 52100 alloy steel having a surface hardness of less than HRc 65.

The method includes creating a second roller hydraulic valve lifter that has a life of at least 1.5 times that of the first roller hydraulic valve lifter. The second roller hydraulic valve lifter is created by substituting the first shaft and the plurality of first needle rollers with a second shaft and a plurality of second needle rollers. The second shaft has the first outside diameter and the plurality of second needle rollers each having the third outside diameter and the axial length, of the same magnitudes of the respective first shaft and plurality of first needle rollers. The method includes utilizing the body of the first roller hydraulic valve lifter, without changing any of the dimensions of the body. The method includes utilizing the outer ring having the second outside diameter, the first inside diameter and the axial length, of the same respective dimensions of the outer ring of the bearing of the first roller hydraulic valve lifter. The plurality of second needle rollers is disposed between and in rolling engagement with the second shaft and the outer ring. The second shaft and the plurality of the second rollers are manufactured from an AISI 52100 alloy steel that is carbo-nitrided. The second shaft and the plurality of second needle rollers each have a surface hardness of a minimum of HRc 65.

In one embodiment, the second shaft and the plurality of second needle rollers each have a minimum carbo-nitrided case depth of 0.25 mm. In one embodiment, the second shaft and the plurality of second needle rollers each have an exterior surface that is in compression. In one embodiment, the exterior surface is treated by a mass finishing process. In one embodiment, the second shaft and the plurality of second needle rollers each have a core hardness of HRc 59 to HRc 65.

There is further disclosed herein a method for manufacturing (e.g., heat treating) a shaft and rollers for a roller hydraulic valve lifter. The method includes the following steps in the order presented: providing an AISI 52100 alloy steel; carbonitriding the AISI 52100 alloy steel; oil quenching the AISI 52100 alloy steel; tempering the AISI 52100 alloy steel at 149°C; and cooling the AISI 52100 alloy steel to -84°C.

In one embodiment, another tempering step is performed at 177°C after the cooling.

In one embodiment, the carbonitriding is performed at 829°C.

### Brief Description of the Drawings

FIG. 1 is a schematic view of a cam-in-block engine valvetrain with a prior art roller hydraulic valve lifter;
FIG. 2 is a perspective view of the roller hydraulic valve lifter of the present invention;
FIG. 3 is a perspective view of a bearing for the roller hydraulic valve lifter of FIG. 2 shown with a temporary plug therein for retaining the needle rollers therein prior to installation in a roller hydraulic valve lifter;
FIG. 4 is a perspective view of the shaft of the roller hydraulic valve lifter of FIG. 2;
FIG. 5 is a cross sectional view of the roller hydraulic valve lifter of FIG. 2 taken across section 5-5;
FIG. 6 is a bottom view of the roller hydraulic valve lifter of FIG. 2;
FIG. 7 is a cross sectional view of the roller hydraulic valve lifter of FIG. 2 taken across section 7-7;
FIG. 8 is a graph of a prior art carbo-nitriding heat treatment process; and
FIG. 9 is a graph of a carbo-nitriding heat treatment process of the present invention.

### Detailed Description

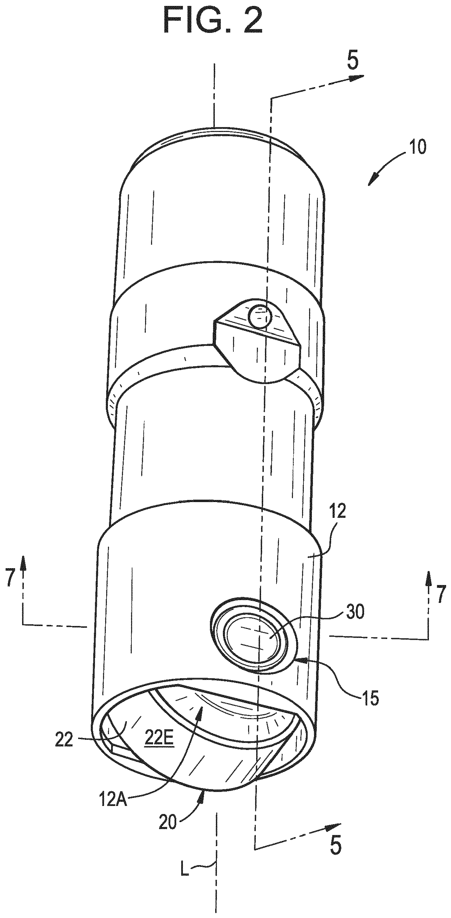

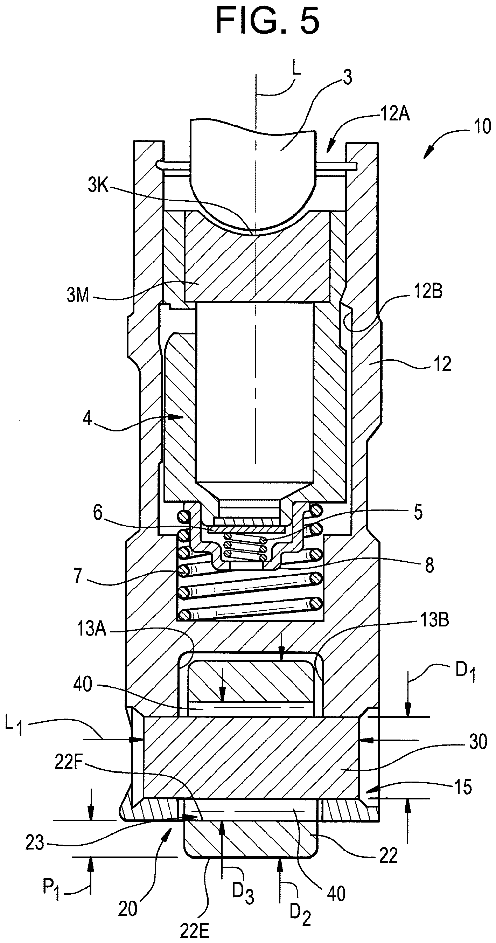

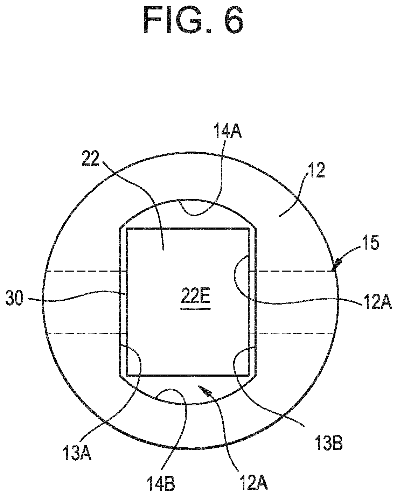

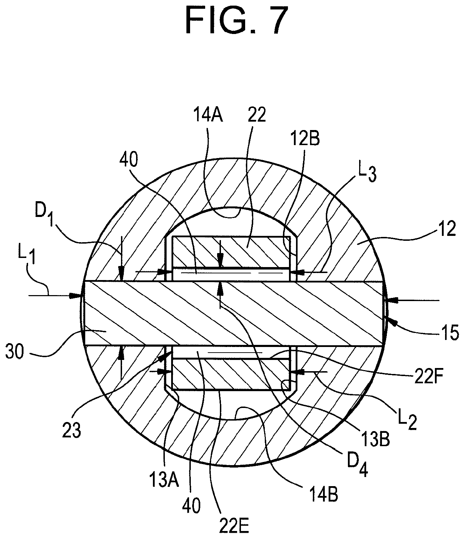

As shown in FIG. 2, a roller hydraulic valve lifter of the present invention is generally designated by the numeral 10. As shown in FIGS. 2 and 5, the roller hydraulic valve lifter 10 includes a generally cylindrical body 12 having a longitudinal central axis L. The body 12 has an interior area 12A defined by an inside surface 12B (see FIG. 5). As shown in FIGS. 5-7, the inside surface 12B includes a first flat surface 13A and a second flat surface 13B opposite the first flat surface 13A. The first flat surface 13A and the second flat surface 13B are connected by a pair of connecting walls 14A and 14B (see FIGS. 6 and 7). In one embodiment, the connecting walls 14A and 14B are arcuate (e.g., a section of a cylinder). A first bore 15 extends through the first flat surface 13A and the second flat surface 13B and entirely through the body 12. The first bore 15 is substantially perpendicular to the longitudinal axis L.

As shown in FIGS. 2, 3 and 5-7 the roller hydraulic valve lifter 10 includes a bearing 20 disposed partially in the interior area 12A. Thus, a portion of the bearing 20 extends axially out of the interior area 12A of the roller hydraulic valve lifter 10 by a distance PI, as shown in FIG. 5. The bearing 20 includes an outer ring 22 that has a substantially cylindrical exterior bearing surface 22E and a substantially cylindrical inner bearing surface 22F that defines a second bore 23. The exterior bearing surface 22E defines an outside diameter D2 and the inner bearing surface 22F defines an inside diameter D3, as shown in FIG. 5. The outer ring 22 has an axial length L2 (depicted in FIG. 7).

As shown in FIG. 5, the hydraulic piston 4 engages a pushrod seat 3K of a pushrod 3 that extends into the interior area 12A. The hydraulic piston 4 is a damper that absorbs shock and takes up clearance between all of the components of the valve train to reduce clatter and other noise. An inner biasing member 5 holds a valve 6 in place against one end of the piston 4. The inner biasing member 5 and valve 6 sit within a damper cup 8, which is held against the piston 4 by outer biasing member 7. In other embodiments, the valve 6 is a ball valve or a check valve with a different structure.

As shown in FIGS. 2 and 4-7, a shaft 30 extends through the first bore 15 and the second bore 23. The shaft 30 extends through the first bore 15 a length L1 and between the first flat surface 13A and the second flat surface 13B. The shaft 30 is substantially cylindrical and has an outside diameter D1.

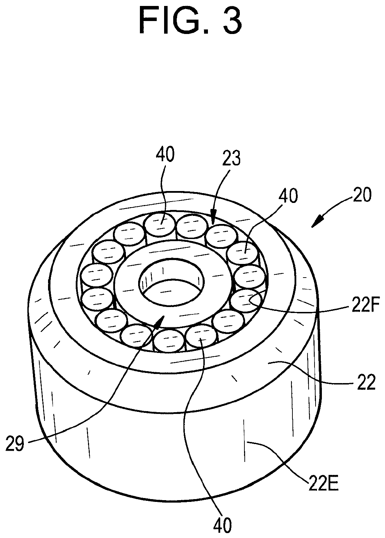

As shown in FIGS. 3, 4, 5 and 7, a plurality of needle rollers 40 are disposed between and rollingly engage an exterior surface 30E of the shaft 30 and the cylindrical inner bearing surface 22F. Each of the plurality of needle rollers 40 is substantially cylindrical and has an axial length L3. Prior to installation of the bearing 20 in the roller hydraulic valve lifter 10, the plurality of needle rollers 40 are temporarily held in position by a plug 29 (e.g., a plastic plug), as shown in FIG. 3. During installation of the bearing 20 in the roller hydraulic valve lifter 10, the shaft 30 is pressed through the bore 15 to displace the plug 29 and hold the plurality of needle rollers 40 in position around the shaft 30. The shaft 30 pushes the plug 29 out of the bore 15. The plurality of needle rollers 40 rollingly engage a portion of the shaft 30 along a length of the shaft about equal to the length L3 of the needle rollers, between the first flat surface 13A and the second flat surface 13B. The plurality of needle rollers 40 are retained axially by and maintain an axial position between the first flat surface 13A and the second flat surface 13B

The shaft 30 and the plurality of needle rollers 40 are manufactured from an AISI 52100 alloy steel that is carbo-nitrided such that the shaft 30 and the plurality of needle rollers 40 each have a surface hardness of a minimum of HRc 65. In one embodiment, the shaft 30 has a surface hardness of HRc 65 to HRc 69. In one embodiment, the plurality of rollers 40 each has a surface hardness of HRc 65 to HRc 69. The shaft 30 and the plurality of needle rollers 40 each have a minimum carbo-nitrided case depth of 0.25 mm. In one embodiment, the shaft 30 and the plurality of needle rollers 40 each have a case depth of 0.25 mm to 0.50 mm.

The shaft 30 and each of the plurality of needle rollers 40 each have an exterior surface that is in compression (e.g., has a residual compressive stress). In one embodiment, the exterior surface is treated by a mass finishing process (e.g., barrel finishing, vibratory finishing, tumbling, or the like to help obtain the compression of the exterior surface. In one embodiment, the shaft 30 and each of the plurality of needle rollers 40 each have a core hardness of HRc 59 to HRc 65.

AISI 52100 is also referred to as GCr15, SUJ2 and 100Cr6 which are the Chinese, Japanese and German versions, respectively and has the following chemical composition, wherein the percentages are given in weight percent.

| | Chemical Compoisition % | | | | | | | | |
|---|---|---|---|---|---|---|---|---|---|
| | **C** | **Mn** | **P** | **S** | **Si** | **Ni** | **Cr** | **Cu** | **Mo** |
| Steel | 0.93-1.10 | 0.500 | 0.030 | 0.025 | 0.15-0.35 | 0.300 | 1.30-1.65 | 0.300 | 0.100 |
| | | Max | Max | Max | | Max | | Max | Max |

The shaft 30 and each of the plurality of needle rollers 40 each have an exterior surface that is in compression, for example, a compressed surface treatment created by a mass finishing process. The shaft 30 and each of the plurality of needle rollers 40 each have a microstructure that has less than 12 percent by volume retained austenite for improved dimensional stability, higher hardness (i.e., greater than HRc 65) and improved wear resistance.

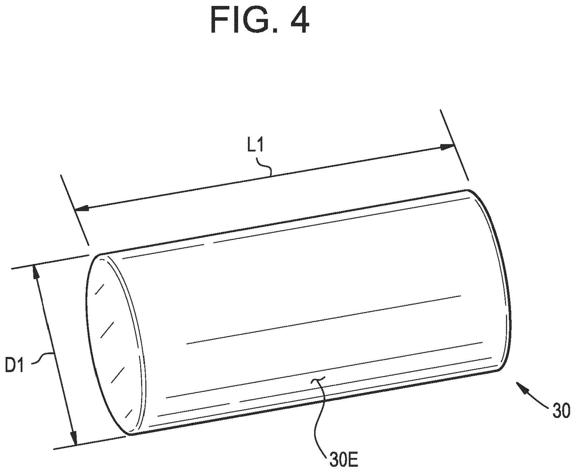

There is also disclosed herein a method of increasing the life of a prior art roller hydraulic valve lifter 105, as illustrated in FIG. 1. The method includes providing a first roller hydraulic valve lifter 105 that includes the body having a predetermined set of dimensions (e.g., outside diameter of the body, clearances between the exterior surface of the bearing 109 and the interior area of the body; clearances between the axial ends of the needle rollers and interior area of the body; and clearances between the axial ends of the bearing 109 and the interior area of the body). The method also includes providing a first shaft 111 mounted in the body. The first shaft 111 has a first outside diameter D1, dimensionally similar to that shown in FIG. 4 for the second shaft 30. The roller hydraulic valve lifter 105 includes a first bearing 109 that has an outer ring which has a second outside diameter D2, a first inside diameter D3 and an axial length L2, dimensionally similar to that shown in FIGS. 5 and 7 for the second bearing 20. The roller hydraulic valve lifter 105 includes a plurality of first needle rollers each having a third outside diameter D4 and an axial length L3, dimensionally similar to that shown in FIG. 7 for the plurality of second needle rollers 40. The plurality of first needle rollers is disposed between and in rolling engagement with the first shaft 111 and the outer ring of the first bearing 109. The first shaft 111 and the plurality of first needle rollers are manufactured from an AISI 52100 alloy steel and have a surface hardness of less than HRc 65.

The method includes creating a second roller hydraulic valve lifter 10 (e.g., by retrofitting the first roller hydraulic valve lifter 105) that has a life of at least 1.5 times that of the first roller hydraulic valve lifter 105. The second roller hydraulic valve lifter 10 is created by substituting the first shaft 111 and the plurality of first needle rollers in the first roller hydraulic valve lifter 105, with a second shaft 30 and a plurality of second needle rollers 40. The second shaft 30 has essentially the same dimension as the first shaft 111 of the first roller hydraulic valve lifter 105. For example, the first and second shafts 111 and 30 both have first outside diameters D1 of the same magnitude. The plurality of second needle rollers 40 each has essentially the same dimensions as the plurality of needle rollers of the first roller hydraulic valve lifter 105. For example, each of the plurality of second needle rollers 40 has a third outside diameter D4 and an axial length L3 of a same magnitude as the plurality of first needle rollers of the first roller hydraulic valve lifter 105. The method includes utilizing the body 12 having the predetermined set of dimensions essentially the same as the body of the first roller hydraulic valve lifter 105. The method also includes utilizing the outer ring 22 having a second outside diameter D2, a first inside diameter D3 and an axial length L2 of essentially the same magnitude compared to the respective dimensions of the outer ring of the bearing 109 of the first roller hydraulic valve lifter 105. The plurality of second needle rollers 40 is disposed between and in rolling engagement with the second shaft 30 and the outer ring 22. The second shaft 30 and the plurality of the second needle rollers 40 are manufactured from an AISI 52100 alloy steel that is carbo-nitrided. The second shaft 30 and plurality of second needle rollers 40 have a surface hardness of a minimum of HRc 65.

In one embodiment, the second shaft 30 and the plurality of second needle rollers 40 each have a minimum carbo-nitrided case depth of 0.25 mm. In one embodiment, the second shaft 30 and the plurality of second needle rollers 40 each have an exterior surface that is in compression. In one embodiment, the exterior surface is treated by a mass finishing process to help enhance the surface compression. In one embodiment, the second shaft 30 and the plurality of second needle rollers 40 each have a core hardness of HRc 59 to HRc 65.

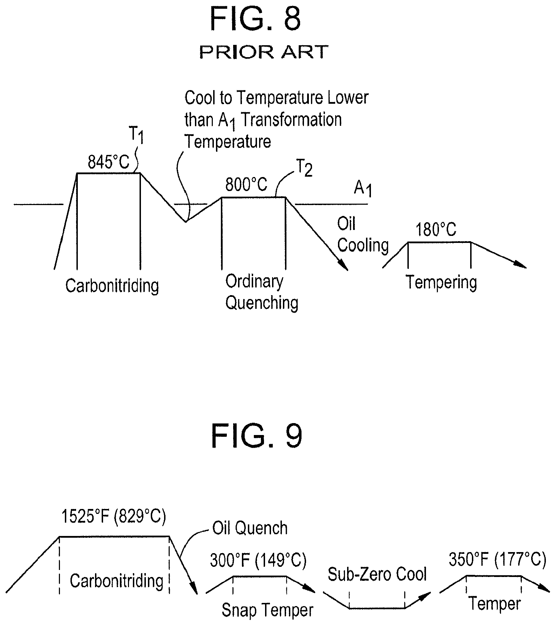

There is also disclosed herein a method for manufacturing (e.g., heat treating, per FIG. 9) the shaft 30 and rollers 40 for a roller hydraulic valve lifter 10 of the present invention. The method includes the following steps in the order presented. An AISI 52100 alloy steel is provided. Step 1 - carbonitriding the AISI 52100 alloy steel; Step 2 - oil quenching the AISI 52100 alloy steel; Step 3 - tempering the AISI 52100 alloy steel at 149°C; and Step 4 - cooling the AISI 52100 alloy steel to -84°C. In one embodiment, the method includes Step 5 - another tempering step that is performed at 177°C after the cooling.

Carbo-nitriding, as used herein refers to heating the parts (e.g., the shaft 30 and the plurality of needle rollers 40) to an austenitizing temperature in a nitrogen rich atmosphere. For example, the gas concentrations in the furnace atmosphere are 0.85% +/- 0.05% carbon and 3.00% ammonia +/- 0.15 m³ per hour ammonia flow rate. FIG. 9 illustrates a heat treatment process (i.e., for an AISI 52100 alloy steel) of the present invention . The heat treatment process includes carbo-nitriding (Step 1) the shaft 30 and the plurality of needle rollers 40 that are manufactured from AISI alloy steel by heating in a furnace at 1525°F +/- 25°F (829°C) in an atmosphere of 0.85% +/- 0.05% carbon and 3.00% ammonia +/- 0.15 m³ per hour ammonia flow rate. After Step 1, the shaft 30 and the plurality of needle rollers 40 are oil quenched (Step 2) to ambient temperature. After Step 2, the shaft 30 and the plurality of needle rollers 40 are tempered (Step 3) for example, snap tempered at 300°F +/- 10°F (149°C). After Step 3, the shaft 30 and the plurality of needle rollers 40 are cooled (Step 4) to -120°F +/- 10°F (-84°C). The temperature for step 4 is chosen to balance the cost against the reduction in retained austenite. In one embodiment, after Step 4, the shaft 30 and the plurality of needle rollers 40 are tempered (Step 5) at 350°F +/- 15°F (177°C). As shown in FIG. 9, the shaft 30 and the plurality of needle rollers 40 are not heated or tempered between Step 1 and Step 2. As shown in FIG. 9, the heat treatment process includes only one quenching step, namely Step 2. The term quenching, as used herein means, the rapid cooling of a workpiece in water, oil or air to obtain certain material properties. Quenching prevents undesired low-temperature processes, such as phase transformations, from occurring. The snap temper referred to in Step 3 is used to stress relieve the part prior to sub-zero cooling. During quenching or rapid cooling, stresses are induced in the steel. Cooling to -120°F directly after quenching adds more stress and can potentially lead to cracking. The snap temper step relieves some of the internal stresses from quenching, reducing the chance of cracking during sub-zero cooling. The heat treatment process results in the shaft 30 and each of the plurality of needle rollers 40 each having a microstructure that has less than 12 percent by volume retained austenite for improved dimensional stability, higher hardness (i.e., greater than HRc 65) and improved wear resistance. The part is less dimensionally stable with more retained austenite. Austenite can change to martensite under stress and temperature changes. Martensite occupies more volume than austenite so the part can grow in volume. Typically, not all the austenite changes to martensite so the actual growth is difficult to predict; however, it does not take much change in volume to reduce the clearance in the bearings if both the shaft and needles are heat treated with this process. Additionally, excessive retained austenite can reduce the surface hardness. Austenite is a softer constituent than martensite or carbides and nitrides that are present. The process is designed to obtain the hardest surface to reduce wear and increase bearing life without being prohibitively expensive.

### Example 1

Over ten load tests of the roller hydraulic valve lifter bearings 20 of the present invention with the shaft 30 and the plurality of needle rollers 40 manufactured from an AISI 52100 alloy steel that is carbo-nitrided; and the shaft and the plurality of rollers each having a surface hardness of a minimum of HRc 65, with high loads and speeds have been run. On average, the roller hydraulic valve lifter bearings 20 did not fail until over 4.8 million revolutions. Whereas, on average, for tests with the same high loads and speeds, the prior art roller hydraulic valve lifter bearings of the prior art roller hydraulic valve lifters 105 with the first shaft and the plurality of first needle rollers manufactured from an AISI 52100 alloy steel having a surface hardness of less than HRc 65 failed at 2.9 million revolutions. Thus, the roller hydraulic valve lifter bearings 20 of the present invention had an increased life of 1.68 times greater than the life of the prior art roller hydraulic valve lifter bearings.

The invention is limited by the scope of the appended claims.

## Claims

1. A roller hydraulic valve lifter (10) comprising:
a body (12) having a longitudinal central axis (L) and an interior area (12A) defined by an inside surface (12B), the inside surface comprising a first flat surface (13A) and a second flat surface (13B) opposite the first flat surface (13A), the first flat surface (13A) and the second flat surface (13B) being connected by a pair of connecting walls (14A, 14B), a first bore (15) extending through the first flat surface (13A) and the second flat surface (13B), the first bore (15) being substantially perpendicular to the longitudinal central axis (L);
a bearing (20) disposed partially in the interior area (12A), the bearing (20) comprising:
an outer ring (22) having a substantially cylindrical exterior bearing surface (22E), and a substantially cylindrical inner bearing surface (22F) that defines a second bore (23);
a shaft (30) extending through the first bore (15) and the second bore (23), the shaft (30) extending between the first flat surface (13A) and the second flat surface (13B);
a plurality of needle rollers (40) disposed between and rollingly engaging the shaft (30) and the cylindrical inner bearing surface (22F);
**characterized in that**
the shaft (30) and the plurality of needle rollers (40) are manufactured from an AISI 52100 alloy steel that is carbo-nitrided and the shaft (30) and plurality of needle rollers (40) have a surface hardness of a minimum of HRc 65;
the shaft (30) and the plurality of needle rollers (40) each have an exterior surface that is in compression and each have exterior surfaces treated by a mass finishing process; and
the shaft (30) and the plurality of needle rollers (40) each have a microstructure having less than 12 volumetric percent retained austenite.

2. The roller hydraulic valve lifter (10) of claim 1, wherein the shaft (30) and the plurality of needle rollers (40) each have a minimum carbo-nitrided case depth of 0.25 mm.

3. The roller hydraulic valve lifter (10) of claim 1, wherein the shaft (30) and the plurality of needle rollers (40) each have a core hardness of HRc 59 to HRc 65.

4. A method of increasing a life of a roller hydraulic valve lifter (105), the method comprising:
providing a first roller hydraulic valve lifter (10) comprising a body (12) having a predetermined set of dimensions and a first shaft (111) mounted in the body, the first shaft (111) having a first outside diameter (D1); providing a first bearing (109) comprising an outer ring having a second outside diameter (D2), a first inside diameter (D3) and an axial length (L2); providing a plurality of first needle rollers each having a third outside diameter (D4) and an axial length (L3), the plurality of first needle rollers being disposed between and in rolling engagement with the first shaft (111) and the outer ring, the first shaft (111) and the plurality of first needle rollers being manufactured from an AISI 52100 alloy steel having a surface hardness of less than HRc 65; and
creating a second roller hydraulic valve lifter (10) that has a life of at least 1.5 times that of the first roller hydraulic valve lifter (105), the second roller hydraulic valve lifter (10) being created by substituting at least the first shaft (111) and the plurality of first needle rollers with a second shaft (30) and a plurality of second needle rollers (40), the second shaft (30) having the first outside diameter, and the plurality of second needle rollers (40) each having the third outside diameter and the corresponding axial length, utilizing the body having the predetermined set of dimensions and utilizing the outer ring having the second outside diameter, the first inside diameter and the corresponding axial length; the plurality of second needle rollers (40) being disposed between and in rolling engagement with the second shaft (30) and the outer ring, and wherein the second shaft (30) and the plurality of the second rollers are manufactured from an AISI 52100 alloy steel that is carbo-nitrided and the second shaft (30) and plurality of second needle rollers (40) having a surface hardness of a minimum of HRc 65.

5. The method of claim 4, wherein the second shaft (30) and the plurality of second needle rollers (40) each have a minimum carbo-nitrided case depth of 0.25 mm.

6. The method of claim 4, wherein the second shaft (30) and the plurality of second needle rollers (40) each have an exterior surface that is in compression.

7. The method of claim 4, further comprising treating the exterior surface with a mass finishing process.

8. The method of claim 4, wherein the second shaft (30) and the plurality of second needle rollers (40) each have a core hardness of HRc 59 to HRc 65.

9. The method of claim 4, further comprising cooling the second shaft (30) and the plurality of the second rollers (40) to -84°C and establishing a microstructure having less than 12 volumetric percent retained austenite.

10. A method for manufacturing a shaft (30) and rollers (40) of a roller hydraulic valve lifter (10) according to any of the claims 1 to 3, the method comprising the following steps in the order presented:
providing an AISI 52100 alloy steel;
carbonitriding the AISI 52100 alloy steel;
oil quenching the AISI 52100 alloy steel;
tempering the AISI 52100 alloy steel at 149°C; and
cooling the AISI 52100 alloy steel to -84°C.

11. The method of claim 10, wherein the carbonitriding is performed at 829°C.

12. The method of claim 10, wherein another tempering is performed at 177°C after the cooling.

## Patentansprüche

1. Hydraulischer Rollen-Ventilstößel (10), aufweisend:
einen Körper (12) mit einer Längsmittelachse (L) und einem Innenbereich (12A), der durch eine Innenfläche (12B) begrenzt ist, wobei die Innenfläche eine erste ebene Fläche (13A) und eine zweite ebene Fläche (13B) gegenüber der ersten ebenen Fläche (13A) aufweist, wobei die erste ebene Fläche (13A) und die zweite ebene Fläche (13B) mittels eines Paars von Verbindungswänden (14A, 14B) verbunden sind, wobei sich eine erste Bohrung (15) durch die erste ebene Fläche (13A) und die zweite ebene Fläche (13B) erstreckt, wobei die erste Bohrung (15) im Wesentlichen senkrecht zu der Längsmittelachse (L) ausgerichtet ist;
ein Lager (20), das teilweise in dem Innenbereich (12A) angeordnet ist, wobei das Lager (20) aufweist:
einen Außenring (22) mit einer im Wesentlichen zylindrischen äußeren Lagerfläche (22E) und einer im Wesentlichen zylindrischen inneren Lagerfläche (22F), die eine zweite Bohrung (23) definiert;
eine Welle (30), die sich durch die erste Bohrung (15) und die zweite Bohrung (23) erstreckt, wobei sich die Welle (30) zwischen der ersten ebenen Fläche (13A) und der zweiten ebenen Fläche (13B) erstreckt;
eine Vielzahl von Nadelrollen (40), die zwischen der Welle (30) und der zylindrischen inneren Lagerfläche (22F) angeordnet sind und in rollendem Eingriff stehen;
**dadurch gekennzeichnet, dass** die Welle (30) und die Vielzahl von Nadelrollen (40) aus einem AISI 52100-Legierungsstahl hergestellt sind, der karbonitriert ist, und die Welle (30) und die Vielzahl der Nadelrollen (40) eine Oberflächenhärte von mindestens HRc 65 haben;
wobei die Welle (30) und die Vielzahl von Nadelrollen (40) jeweils eine Außenfläche haben, die unter Druck steht, und jeweils Außenflächen haben, die durch einen Massenveredelungsprozess behandelt wurden; und
wobei die Welle (30) und die Vielzahl von Nadelrollen (40) jeweils ein Gefüge mit weniger als 12 Volumenprozent Restaustenit aufweisen.

2. Hydraulischer Rollen-Ventilstößel (10) nach Anspruch 1, wobei der Schaft (30) und die Vielzahl von Nadelrollen (40) jeweils eine minimale karbonitrierte Randschichttiefe von 0,25 mm haben.

3. Hydraulischer Rollen-Ventilstößel (10) nach Anspruch 1, wobei die Welle (30) und die Vielzahl von Nadelrollen (40) jeweils eine Kernhärte von HRc 59 bis HRc 65 haben.

4. Verfahren zur Erhöhung der Lebensdauer eines hydraulischen Rollen-Ventilstößels (105), wobei das Verfahren aufweist:
Bereitstellen eines ersten hydraulischen Rollen-Ventilstößels (10), der einen Körper (12) mit einem vorbestimmten Satz von Abmessungen und eine in dem Körper montierte erste Welle (111) aufweist, wobei die erste Welle (111) einen ersten Außendurchmesser (D1) aufweist; Bereitstellen eines ersten Lagers (109), das einen Außenring mit einem zweiten Außendurchmesser (D2), einen ersten Innendurchmesser (D3) und eine axiale Länge (L2) hat; Bereitstellen einer Vielzahl von ersten Nadelrollen, die jeweils einen dritten Außendurchmesser (D4) und eine axiale Länge (L3) haben, wobei die Vielzahl von ersten Nadelrollen zwischen der ersten Welle (111) und dem Außenring angeordnet sind und in rollendem Eingriff stehen, wobei die erste Welle (111) und die Vielzahl von ersten Nadelrollen aus einem AISI 52100-Legierungsstahl mit einer Oberflächenhärte von weniger als HRc 65 hergestellt sind; und
Erzeugen eines zweiten hydraulischen Rollen-Ventilstößels (10), der eine Lebensdauer von mindestens dem 1,5-fachen der des ersten hydraulischen Rollen-Ventilstößels (105) hat, wobei der zweite hydraulische Rollen-Ventilstößel (10) erzeugt wird, indem zumindest die erste Welle (111) und die Vielzahl der ersten Nadelrollen durch eine zweite Welle (30) und eine Vielzahl von zweiten Nadelrollen (40) ersetzt werden, wobei die zweite Welle (30) den ersten Außendurchmesser hat und die Vielzahl der zweiten Nadelrollen (40) jeweils den dritten Außendurchmesser und die entsprechende axiale Länge haben, wobei der Körper mit dem vorbestimmten Satz von Abmessungen verwendet wird und der Außenring mit dem zweiten Außendurchmesser, dem ersten Innendurchmesser und der entsprechenden axialen Länge verwendet wird; wobei die Vielzahl der zweiten Nadelrollen (40) zwischen der zweiten Welle (30) und dem Außenring angeordnet sind und in rollendem Eingriff stehen, und wobei die zweite Welle (30) und die Vielzahl der zweiten Rollen aus einem AISI 52100-Legierungsstahl hergestellt sind, der karbonitriert ist, und die zweite Welle (30) und die Vielzahl der zweiten Nadelrollen (40) eine Oberflächenhärte von mindestens HRc 65 haben.

5. Verfahren nach Anspruch 4, wobei die zweite Welle (30) und die Vielzahl der zweiten Nadelrollen (40) jeweils eine minimale karbonitrierte Randschichttiefe von 0,25 mm haben.

6. Verfahren nach Anspruch 4, wobei die zweite Welle (30) und die Vielzahl der zweiten Nadelrollen (40) jeweils eine Außenfläche haben, die unter Druck steht.

7. Verfahren nach Anspruch 4, ferner aufweisend Behandeln der Außenfläche mit einem Massenveredelungsprozess.

8. Verfahren nach Anspruch 4, wobei die zweite Welle (30) und die Vielzahl der zweiten Nadelrollen (40) jeweils eine Kernhärte von HRc 59 bis HRc 65 haben.

9. Verfahren nach Anspruch 4, ferner aufweisend Abkühlen der zweiten Welle (30) und der Vielzahl der zweiten Rollen (40) auf -84°C und Herstellen eines Gefüges mit weniger als 12 Volumenprozent Restaustenit.

10. Verfahren zur Herstellung einer Welle (30) und von Rollen (40) eines hydraulischen Rollen-Ventilstößels (10) nach einem der Ansprüche 1 bis 3, wobei das Verfahren die folgenden Schritte in der dargestellten Reihenfolge aufweist:
Bereitstellen eines AISI 52100-Legierungsstahls;
Carbonitrieren des AISI 52100-Legierungsstahls;
Ölabschrecken des AISI 52100-Legierungsstahls;
Anlassen des AISI 52100-Legierungsstahls bei 149°C; und
Abkühlen des AISI 52100-Legierungsstahls auf -84°C.

11. Verfahren nach Anspruch 10, wobei das Carbonitrieren bei 829°C durchgeführt wird.

12. Verfahren nach Anspruch 10, wobei ein weiteres Anlassen bei 177°C nach dem Abkühlen durchgeführt wird.

## Revendications

1. Poussoir hydraulique à galet de soupape (10) comprenant :
un corps (12) ayant un axe central longitudinal (L) et une zone interne (12A) définie par une surface interne (12B), la surface interne comprenant une première surface plate (13A) et une seconde surface plate (13B) opposée à la première surface plate (13A), la première surface plate (13A) et la seconde surface plate (13B) étant reliées par une paire de parois de liaison (14A, 14B), un premier alésage (15) s'étendant à travers la première surface plate (13A) et la seconde surface plate (13B), le premier alésage (15) étant sensiblement perpendiculaire à l'axe central longitudinal (L) ;
un roulement (20) disposé partiellement dans la zone interne (12A), le roulement (20) comprenant :
une bague extérieure (22) ayant une surface de roulement externe sensiblement cylindrique (22E), et une surface de roulement intérieure sensiblement cylindrique (22F) qui définit un second alésage (23) ;
un arbre (30) s'étendant à travers le premier alésage (15) et le second alésage (23), l'arbre (30) s'étendant entre la première surface plate (13A) et la seconde surface plate (13B) ;
une pluralité d'aiguilles (40) disposées entre et venant en prise par roulement avec l'arbre (30) et la surface de roulement intérieure cylindrique (22F) ;
**caractérisé en ce que** l'arbre (30) et la pluralité d'aiguilles (40) sont fabriqués à partir d'un acier allié AISI 52100 qui est carbonitruré et l'arbre (30) et la pluralité d'aiguilles (40) ont une dureté de surface d'un minimum de 65 HRC ;
l'arbre (30) et la pluralité d'aiguilles (40) ont chacun une surface externe qui est en compression et ont chacun des surfaces externes traitées par un procédé de vibroabrasion ; et
l'arbre (30) et la pluralité d'aiguilles (40) ont chacun une microstructure ayant moins de 12 pour cent en volume d'austénite résiduelle.

2. Poussoir hydraulique à galet de soupape (10) selon la revendication 1, dans lequel l'arbre (30) et la pluralité d'aiguilles (40) ont chacun une profondeur de carbonitruration minimale de 0,25 mm.

3. Poussoir hydraulique à galet de soupape (10) selon la revendication 1, dans lequel l'arbre (30) et la pluralité d'aiguilles (40) ont chacun une dureté de noyau de 59 HRC à 65 HRC.

4. Procédé d'augmentation d'une durée de vie d'un poussoir hydraulique à galet de soupape (105), le procédé comprenant :
la fourniture d'un premier poussoir hydraulique à galet de soupape (10) comprenant un corps (12) ayant un ensemble prédéterminé de dimensions et un premier arbre (111) monté dans le corps, le premier arbre (111) ayant un premier diamètre externe (D1) ; la fourniture d'un premier roulement (109) comprenant une bague extérieure ayant un deuxième diamètre externe (D2), un premier diamètre interne (D3) et une longueur axiale (L2) ; la fourniture d'une pluralité de premières aiguilles ayant chacune un troisième diamètre externe (D4) et une longueur axiale (L3), la pluralité de premières aiguilles étant disposées entre et en prise par roulement avec le premier arbre (111) et la bague extérieure, le premier arbre (111) et la pluralité de premières aiguilles étant fabriqués à partir d'un acier allié AISI 52100 ayant une dureté de surface de moins de 65 HRC ; et
la création d'un second poussoir hydraulique à galet de soupape (10) qui a une durée de vie d'au moins 1,5 fois celle du premier poussoir hydraulique à galet de soupape (105), le second poussoir hydraulique à galet de soupape (10) étant créé en remplaçant au moins le premier arbre (111) et la pluralité de premières aiguilles par un second arbre (30) et une pluralité de secondes aiguilles (40), le second arbre (30) ayant le premier diamètre externe, et la pluralité de secondes aiguilles (40) ayant chacune le troisième diamètre externe et la longueur axiale correspondante, en utilisant le corps ayant l'ensemble prédéterminé de dimensions et en utilisant la bague extérieure ayant le deuxième diamètre externe, le premier diamètre interne et la longueur axiale correspondante ; la pluralité de secondes aiguilles (40) étant disposées entre et en prise par roulement avec le second arbre (30) et la bague extérieure, et dans lequel le second arbre (30) et la pluralité des secondes aiguilles sont fabriqués à partir d'un acier allié AISI 52100 qui est carbonitruré et le second arbre (30) et la pluralité de secondes aiguilles (40) ayant une dureté de surface d'un minimum de 65 HRC.

5. Procédé selon la revendication 4, dans lequel le second arbre (30) et la pluralité de secondes aiguilles (40) ont chacun une profondeur de carbonitruration minimale de 0,25 mm.

6. Procédé selon la revendication 4, dans lequel le second arbre (30) et la pluralité de secondes aiguilles (40) ont chacun une surface externe qui est en compression.

7. Procédé selon la revendication 4, comprenant en outre le traitement de la surface externe avec un procédé de vibroabrasion.

8. Procédé selon la revendication 4, dans lequel le second arbre (30) et la pluralité de secondes aiguilles (40) ont chacun une dureté de noyau de 59 HRC à 65 HRC.

9. Procédé selon la revendication 4, comprenant en outre le refroidissement du second arbre (30) et de la pluralité de secondes aiguilles (40) à -84 °C et l'établissement d'une microstructure ayant moins de 12 pour cent en volume d'austénite résiduelle.

10. Procédé permettant de fabriquer un arbre (30) et des aiguilles (40) d'un poussoir hydraulique à galet de soupape (10) selon l'une quelconque des revendications 1 à 3, le procédé comprenant les étapes suivantes dans l'ordre présenté :
la fourniture d'un acier allié AISI 52100 ;
la carbonitruration de l'acier allié AISI 52100 ;
la trempe à l'huile de l'acier allié AISI 52100 ;
le revenu de l'acier allié AISI 52100 à 149 °C ; et
le refroidissement de l'acier allié AISI 52100 à - 84 °C.

11. Procédé selon la revendication 10, dans lequel la carbonitruration est réalisée à 829 °C.

12. Procédé selon la revendication 10, dans lequel un autre revenu est réalisé à 177 °C après le refroidissement.
